# EUROPÄISCHE PATENTSCHRIFT

(11) **EP 3 142 835 B1**
(45) Veröffentlichungstag und Bekanntmachung des Hinweises auf die Patenterteilung: **13.02.2019**
(21) Anmeldenummer: 15722981.6
(22) Anmeldetag: 06.05.2015
(51) Int. Cl.: B26D 7/30, G01G 19/56

(54) **SCHNEIDEMASCHINE MIT WÄGEVORRICHTUNG**
CUTTING MACHINE WITH SCALE DEVICE
TRANCHEUSE À DISPOSITIF DE PESÉE

(30) Priorität: 15.05.2014 DE 102014106856
(43) Veröffentlichungstag der Anmeldung: 22.03.2017
(73) Patentinhaber: Bizerba SE & Co. KG, 72336 Balingen (DE)
(72) Erfinder: HECK, Michael, 72406 Bisingen (DE); DINGER, Manfred, 72336 Balingen (DE)
(74) Vertreter: Huber, Meik
(86) Internationale Anmeldenummer: PCT/EP2015/059918
(87) Internationale Veröffentlichungsnummer: WO 2015/173084

(56) Entgegenhaltungen:
- EP-A1- 1 637 296
- DE-U1- 8 807 446
- DE-U1- 29 804 979

## Beschreibung

Die Erfindung betrifft eine Schneidemaschine mit Wägevorrichtung nach den Merkmalen des Oberbegriffs des Anspruchs 1.

Eine solche Schneidemaschine ist beispielsweise aus der DE 88 07 446 U1 bekannt. Diese Schneidemaschine weist eine Wiegeeinheit mit einer in die Schneidemaschine integrierten Anzeige auf. Die Wiegeeinheit ist auf einer Grundplatte angebracht, die im Bereich der Schneidemaschine angeordnet werden kann oder in eine Aufnahme der Schneidemaschine eingeschoben wird. In dieser Aufnahme ist die Grundplatte sozusagen schwimmend gelagert. Über einen U-förmigen Bügel ist die Wiegeeinheit mit einer abnehmbaren Lastplatte verbunden, wobei die Lastplatte im Ablagebereich der Schneidemaschine angeordnet wird. Nachteilig bei dieser Lösung ist, dass bei der Wahlmöglichkeit der Positionierung der Wiegeeinheit einmal über eine schwimmende Lagerung im Gehäuse und einmal neben der Schneidemaschine das Wiegeergebnis negativ beeinträchtigt wird. Eine Zulassung dieser Waage als eichfähige Waage bzw. als für den Frischeverkauf geeignete Waage ist daher kaum möglich.

Aus der DE 38 36 859 A1 ist eine an eine Verkaufswaage angeschlossene Schneidemaschine bekannt. Ein im Bereich der Schneidgutauflage der Schneidemaschine angeordnete Leseeinheit erfasst die Warengruppe bzw. den Preis von auf der Schneidgutauflage aufgelegtem Schneidgut. Ein als Lastaufnehmer ausgebildetes Ablagetablett erfasst das Gewicht der aufgeschnittenen Waren. Das Ablagetablett ist als Lastaufnehmer einer Ladenwaage ausgebildet und mit der Ladenwaage verbunden. Die Ladenwaage wird getrennt von der Schneidemaschine aufgestellt.

Aus der DE 20 2007 006 209 U1 ist ebenfalls eine Schneidemaschine mit einer als Verkaufswaage ausgebildeten Waage bekannt. Die Waage weist einen als Lastaufnehmer ausgebildeten Wiegeteller auf, der oben auf eine ebene Fläche der Schneidemaschine aufgelegt wird. Über eine in die Schneidemaschine integrierte Anzeigevorrichtung, die ein Bediener- und ein Kundendisplay aufweist, wird das Wiegeergebnis angezeigt. Eine Integration des Lastaufnehmers in die Schneidemaschine ist bei diesen zum Verkauf zugelassenen Wiegeeinheiten nicht vorgesehen.

Die EP 0 767 724 B1 zeigt eine Schneidemaschine mit einer fest in die Schneidemaschine integrierten Wiegevorrichtung. Die Wiegevorrichtung ist unterhalb des Ablagebereichs in dem Gehäuse der Schneidemaschine aufgenommen. Die Krafteinleitung erfolgt durch eine in dem Ablagebereich des Schneidemaschinengehäuses angeordnete Öffnung. Diese Öffnung ist nur sehr schwer abzudichten. So besteht zum einen durch eine Dichtung in diesem Bereich die Gefahr eines Kraftnebenschlusses und damit eines ungenauen Messergebnisses, und zum anderen kann die Wiegeeinrichtung durch die Öffnung hindurch verunreinigt werden.

Die Erfindung löst die Aufgabe, eine Schneidemaschine zu schaffen, die kompakt aufgebaut und universell einsetzbar ist. Insbesondere soll die Schneidemaschine modular aufgebaut und wahlweise erweiterbar sein. Dabei soll die Schneidemaschine eine verkaufsfähige Wiegeeinrichtung umfassen und vorzugsweise hohe hygienische Standards erfüllen.

Diese Aufgabe wird erfindungsgemäß durch eine Schneidemaschine nach den Merkmalen des Anspruchs 1 gelöst.

Die erfindungsgemäße Schneidemaschine ist so ausgebildet, dass die Wägevorrichtung als separate Baueinheit ausgebildet ist, die wahlweise mit dem Maschinengehäuse mechanisch fest verbindbar ist. Dies wird bewerkstelligt, indem der Lastaufnehmer einen Biegestab mit einem feststehenden Ende und einem beweglichen Ende umfasst, wobei das bewegliche Ende mit der Lastplatte und das feststehende Ende entweder mittelbar, beispielsweise über einen Wägerahmen, oder unmittelbar bzw. direkt mit dem Maschinengehäuse lösbar und mechanisch fest verbindbar ist.

Von Vorteil ist dabei, dass die Wägevorrichtung mit dem Maschinengehäuse mechanisch fest verbunden und in dieses integriert ist, bzw. in einem Bauraum innerhalb des Maschinengehäuses angeordnet ist. Dadurch benötigt die erfindungsgemäße Schneidemaschine nur einen sehr geringen Platz zum Aufstellen derselben. Die Schneidemaschine ist mit der Wägevorrichtung modular erweiterbar. Sie kann insbesondere auch ohne die Wägevorrichtung betrieben werden und es können, um unterschiedliche Anforderungen zu erfüllen, unterschiedliche Wägevorrichtungen eingesetzt werden. So können beispielsweise für unterschiedliche Lastbereiche, entsprechend angepasste Wägevorrichtungen vorgesehen werden.

Die Wägevorrichtung ist als separate Baueinheit ausgebildet. Das bedeutet, dass die Wägevorrichtung als eigenständiges Modul ausgebildet ist, welches austauschbar ist und insbesondere keine elektrische Verbindung zu der Schneidemaschine benötigt. Dies erleichtert einen Austausch bzw. eine Ausrüstung der Schneidemaschine mit der Wägevorrichtung. Zudem funktioniert die Schneidemaschine in ihrer Grundfunktion unbeeinträchtigt, ob die Wägevorrichtung in die Schneidemaschine eingesetzt ist oder nicht.

Der Biegestab der Wägevorrichtung kann als EMK-(Elektromagnetkraftkompensations-) Lastaufnehmer oder als DMS-(Dehnungsmessstreifen-) Lastaufnehmer ausgebildet sein. Ebenso kann der Biegestab einen Lastaufnehmer aufweisen, der nach dem Prinzip der schwingenden Saite aufgebaut ist.

Es ist vorgesehen, das die Wägevorrichtung als zum Verkauf zugelassene und/oder eichtechnisch zugelassene und/oder zulassungsfähige Wägevorrichtung ausgebildet ist. Zum Verkauf zugelassen bzw. eichtechnisch zulassungsfähig bedeutet, dass die Wägevorrichtung gemäß den Vorschriften oder den Eichgesetzen eines entsprechenden Landes aufgebaut ist, und somit durch eine Eichbehörde geeicht und zugelassen werden kann.

Erfindungsgemäß ist vorgesehen, dass bei der Herstellung der Schneidemaschine die Wägevorrichtung außerhalb der Schneidemaschine geeicht wird und nach dem Eichvorgang in die Schneidemaschine eingesetzt und mit dieser mechanisch fest verbunden wird.

Zum Eichen der Wägevorrichtung kann dabei so vorgegangen werden, dass die Wägevorrichtung zum Eichen in eine Aufnahmevorrichtung eingesetzt und in der Aufnahmevorrichtung an denselben Befestigungspunkten mit der Aufnahmevorrichtung mechanisch fest und lösbar verbunden wird, mit denen die Wägevorrichtung nachher in der Schneidemaschine befestigt wird. Dies ermöglicht eine einfache und insbesondere automatisierte Eichung der Wägevorrichtung.

Um eine Manipulation oder eine Sabotage der Wägevorrichtung zu unterbinden, kann vorgesehen sein, dass die Wägevorrichtung nach abgeschlossenem Eichvorgang außerhalb der Schneidemaschine mit einer Plombe versehen wird. Die Plombe kann als mechanische Plombe oder als Softwareplombe ausgebildet sein.

Es ist vorgesehen, dass die Wägevorrichtung modular und insbesondere erweiterbar ausgebildet ist, d.h. sie kann mit weiteren Komponenten verbunden werden oder mit solchen zusammenwirken. Insbesondere kann die Wägevorrichtung mit einem Waagenverbund zusammenwirken, der eine oder mehrere Ladenwaagen aufweist, oder mit weiteren Komponenten verbunden werden. Dazu ist vorgesehen, dass die Wägevorrichtung nach dem Einbau in die Schneidemaschine über eine Schnittstelle mit einer Anzeigeeinheit und einem Drucker und/oder einer CPU-Einheit verbunden wird. Die CPU-Einheit kann eine zentrale Steuereinheit sein, die einen Mikroprozessor aufweist und auf der Steuerprozesse oder Dienstprogramme für die Waage ausgeführt werden.

In einer Ausführung kann vorgesehen sein, dass die Schneidemaschine zum Abtrennen von Scheiben von strangförmigen Lebensmitteln ausgebildet ist. Sie weist ein Maschinengehäuse auf, das einen Antriebsmotor und ein von dem Antriebsmotor angetriebenes rotierendes Schneidmesser haltert. Ein im Bereich des Schneidmessers angeordneten Ablagebereich ist zum Ablegen der abgetrennten Scheiben vorgesehen. Eine Wägevorrichtung ist in einem unterhalb des Ablagebereichs angeordneten Bauraum des Maschinengehäuses angeordnet und umfasst einen Lastaufnehmer und eine in dem Ablagebereich angeordnete Lastplatte. Auf die Lastplatte werden die abgetrennten Scheiben aufgelegt.

Für eine besonders einfache und gute Befestigung der Wägevorrichtung kann vorgesehen sein, dass das Maschinengehäuse in dem Bauraum mindestens zwei Aufnahmen zur lösbaren Befestigung der Wägevorrichtung aufweist, und die Aufnahmen als Schraubaufnahmen und/oder Rastaufnahmen und/oder Bajonettaufnahmen ausgebildet sind. Beispielsweise können die mindestens zwei Aufnahmen an der Unterseite einer Basisplatte des Maschinengehäuses angeordnet sein, wobei die Oberseite der Basisplatte zu dem Ablagebereich hin gerichtet ist und die Unterseite der Basisplatte den Bauraum nach oben hin abschließt.

In einer Ausführung kann vorgesehen sein, dass der Biegestab der Wägevorrichtung mit seinem feststehenden Ende in einem Wägerahmen der Wägevorrichtung befestigt ist, und der Wägerahmen mindestens zwei mit den Aufnahmen des Bauraums korrespondierende Befestigungen aufweist und über diese mit dem Maschinengehäuse verbunden ist. Insbesondere ist der Wägerahmen an den Aufnahmen hängend befestigt.

Die Wägevorrichtung ist in das Maschinengehäuse integriert bzw. an Befestigungen innerhalb des Maschinengehäuses aufgehängt. Die Wägevorrichtung weist daher keine eigenen Füße oder Auflagen für eine Standfläche auf. Sie nutzt die Füße des Schneidemaschinengehäuses, die auf einer ebenen Auflagefläche, beispielsweise einer Verkaufstheke oder einem Bearbeitungstisch, aufliegen. Um die Wägevorrichtung exakt horizontal auszurichten kann vorgesehen sein, dass das Maschinengehäuse höhenverstellbare Standfüße aufweist und die horizontale Ausrichtung der Wägevorrichtung und/oder des Lastaufnehmers durch Einstellung dieser Standfüße justierbar ist. Eine einfache Kontrolle der horizontalen Ausrichtung der Wägeeinrichtung kann erfolgen, indem der Lastaufnehmer oder der Wägerahmen eine optische Libelle aufweist, die von außerhalb des Maschinengehäuses einsehbar ist.

Um eine Zerstörung des Biegestabs bzw. der Wägeeinrichtung bei zu hoher Last zu verhindern, kann vorgesehen sein, dass der Wägerahmen einen als Überlastsicherung dienenden, insbesondere einstellbaren, Anschlag aufweist.

Für einen guten mechanischen Schutz der Wägeeinrichtung kann vorgesehen sein, dass der in dem Maschinengehäuse angeordnete Bauraum nach oben hin zu dem Ablagebereich geschlossen ausgebildet und von zumindest zwei von dem Ablagebereich ausgehenden Wänden des Maschinengehäuses umfasst ist, so dass der Bauraum und/oder der Lastaufnehmer gegen das Eindringen von Flüssigkeiten aus dem Ablagebereich geschützt ist.

In einer Ausführung kann vorgesehen sein, dass die Lastplatte von der Wägeeinrichtung auf einfache Art und Weise abnehmbar ist, beispielsweise um diese zu reinigen. Dazu kann das bewegliche Ende des Biegestabs über ein Krafteinleitungselement mit der Lastplatte verbunden sein und das Krafteinleitungselement eine werkzeuglos lösbare Kupplungseinrichtung zur Aufnahme der Lastplatte aufweisen.

Um ein möglichst genaues Messergebnis sicherzustellen und zudem zu verhindern, dass die Wägeeinrichtung bei abgenommener oder nicht korrekter Lastplatte in Betrieb genommen wird, kann vorgesehen sein, dass die Kupplungseinrichtung einen Sensor, vorzugsweise einen Reedkontakt oder einen Mikroschalter oder einen optischen Schalter zur Detektion der korrekten Aufnahme der Lastplatte aufweist.

Eine gute Halterung der Lastplatte ergibt sich, indem die Kupplungseinrichtung einen Magnet zum Haltern der Lastplatte aufweist. Weiterhin kann die Kupplungseinrichtung eine Aufnahmeöffnung oder mehrere Aufnahmeöffnungen für Lagerbolzen der Lastplatte aufweisen.

Es ist vorgesehen, dass die Wägevorrichtung in einem Verkaufsverbund mit anderen Wägevorrichtungen oder weiteren Ladenwaagen zusammenarbeiten kann. Dazu weist die Wägevorrichtung bzw. der Lastaufnehmer eine Schnittstelle zum Anschluss eines Druckers und/oder einer Anzeigeeinrichtung und/oder einer Eingabeeinrichtung und/oder einer weiteren Wägeeinrichtung auf. Für einen besonders störungsfreien Betrieb kann vorgesehen sein, dass die Schnittstelle als digitale Schnittstelle, insbesondere als drahtgebundene serielle Schnittstelle zum Anschluss eines Bussystems oder als drahtlose Schnittstelle ausgebildet ist.

Um bei einem Verkauf oder einer Reparatur oder einem Service der Schneidemaschine einen besonders einfachen Ablauf zu erzielen, ist vorgesehen, dass eine Verkaufeinheit gebildet wird, bei der die Schneidemaschine und die Wägevorrichtung zum Verkauf jeweils separat in eigenen Paketen verpackt sind. So können die Schneidemaschine und die Wägeeinrichtung jeweils separat versendet werden, oder aber beide Verpackungseinheiten gemeinsam zu einem Abnehmer oder einem Aufstellungsort geliefert werden.

Eine Anwendung der erfindungsgemäßen Schneidemaschine ist beispielsweise im Frischeverkauf vorgesehen, um Wurst oder Käse aufzuschneiden, und diese in beliebigen Portionsgrößen zu verkaufen.

Weitere Ausführungen und Beispiele der Erfindung sind in den Figuren gezeigt und nachstehend beschrieben.

Dabei zeigen:
- Fig. 1:: eine perspektivische Ansicht der erfindungsgemäßen Schneidemaschine;
- Fig. 2:: die Schneidemaschine in Vorderansicht;
- Fig. 3a:: die Wiegevorrichtung in perspektivischer Darstellung;
- Fig. 3b:: die Wiegevorrichtung ohne Lastplatte;
- Fig. 4:: eine Draufsicht auf die Wiegevorrichtung;
- Fig. 5:: Eine Schnittdarstellung im Bereich der Wiegevorrichtung.

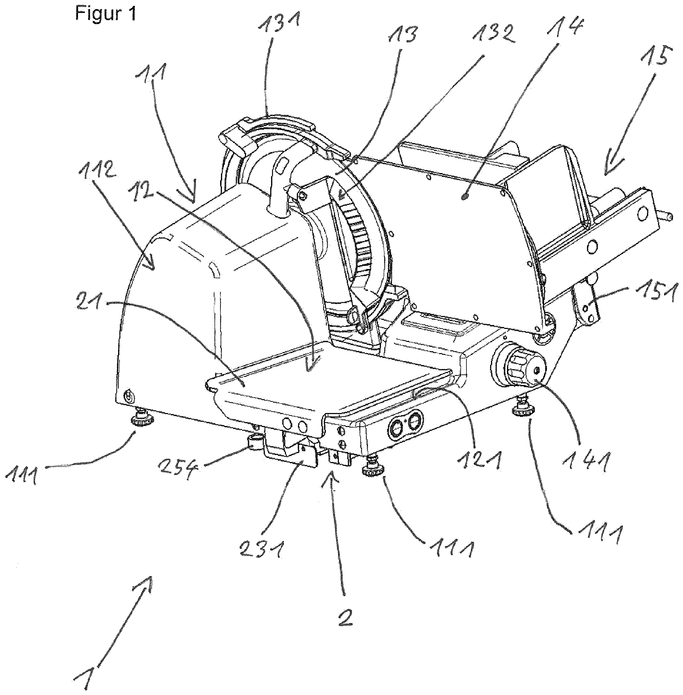

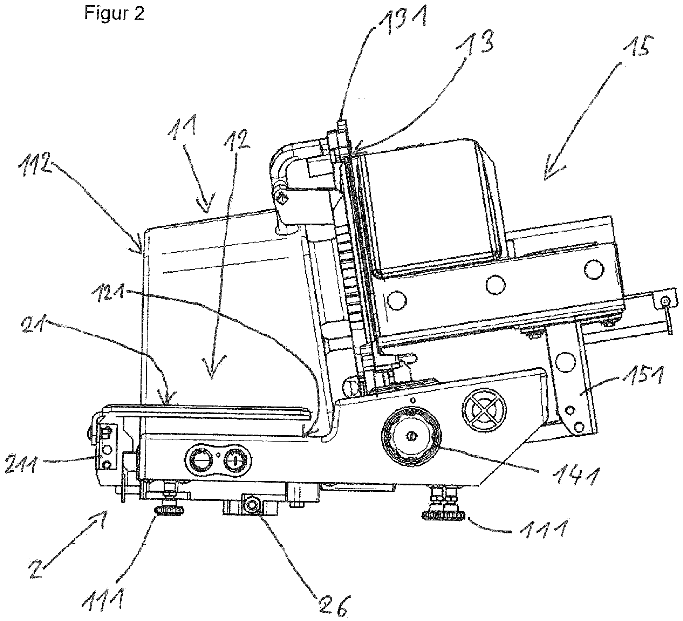

Die Figuren 1 bis 5 zeigen eine erfindungsgemäße Ausführung der Schneidemaschine 1 mit Wägevorrichtung 2. **Die** **Fig. 1** zeigt die Schneidemaschine 1 in perspektivischer Ansicht, wobei der Ablagebereich 12, in dem die abgeschnittenen Scheiben abgelegt werden, im Vordergrund dargestellt ist. **Die** **Fig. 2** zeigt die gleiche Schneidemaschine 1 in Vorderansicht, d.h. wie sie ein Bediener, der vor der Maschine steht und die Maschine bedient, sieht.

Die Schneidemaschine 1 weist ein Maschinengehäuse 11 aus Aluminium auf, an dem ein rotierendes kreisförmiges Schneidmesser 13 und ein als Schnittgutauflage dienender Schneidgutschlitten 15 gelagert ist. Das Schneidmesser 13 wird von einem Motor angetrieben und rotiert in einer Schneidebene, die im rechten Winkel zu der Schneidgutauflage verläuft. Der Motor zum Antrieb des Schneidmessers 13 ist in dem Maschinengehäuse 11 bzw. in einem von diesem gebildeten Motorturm 112 aufgenommen. Das Maschinengehäuse 11 weist eine im unteren Bereich des Maschinengehäuses angeordnete im Wesentlichen quaderförmige Basis auf, die als Sockel mit im Wesentlichen rechteckiger Grundfläche ausgebildet ist. Diese definiert eine stabile Standfläche für das Maschinengehäuse 11. Der Motorturm 112 erstreckt sich von dieser Basis ausgehend nach oben und bildet in seinem Inneren einen Aufnahmeraum für den Motor aus. Das Maschinengehäuse kann im Druckgußverfahren oder im Kokillengußverfahren oder im Sandgußverfahren hergestellt werden.

Der Schlitten 15 ist parallel zu der Schneidebene hin und her bewegbar und ist über einen Schlittenfuß 151 in einer Schlittenführung des Maschinengehäuses 11 verschiebbar gelagert. Der bewegliche Schlitten 15 weist eine ebene Schneidgutauflage zur Aufnahme von vorzugsweise strangförmigem Schneidgut, sowie einen Schneidguthalter auf. Im vorderen Bereich des Schlittens ist als Unfallschutz ein Berührungsschutz angeordnet.

Eine Anschlagplatte 14 ist vor dem Schneidmesser parallel zu der Schneidebene angeordnet, um die Schneidstärke der abgetrennten Scheiben zu definieren. Die Anschlagplatte 14 ist über eine Schneidstärkeneinstellung 141 parallel zu der Schneidebene verschiebbar. Das auf dem Schlitten 15 aufliegende Schneidgut liegt beim Schneiden an der Anschlagplatte 14 an und wird von dieser über die Hin- und Her-Bewegung des Schlittens 15 dem Schneidmessers 13 zugeführt, sodass von dem Schneidgut einzelne Scheiben abgetrennt werden, deren Stärke sich durch den über die Anschlagplatte 14 eingestellten Schneidspalt ergibt.

Im Bereich hinter dem Schneidmesser 13 ist ein Abstreifer 132 angeordnet, der die abgetrennten Scheiben von dem Schneidmesser 13 weg und hin zu dem Ablagebereich 12 leitet. Die Schneide des kreisförmigen Schneidmessers 13 ist von einem Messerschutzring 131 abgedeckt, der die Schneide C-förmig umgreift und einen Berührschutz für das Schneidmesser bildet. Zusammen mit der Anschlagplatte 14 und dem Messerschutzring 131 ist die Schneide des Kreismessers 13 rundherum abgedeckt.

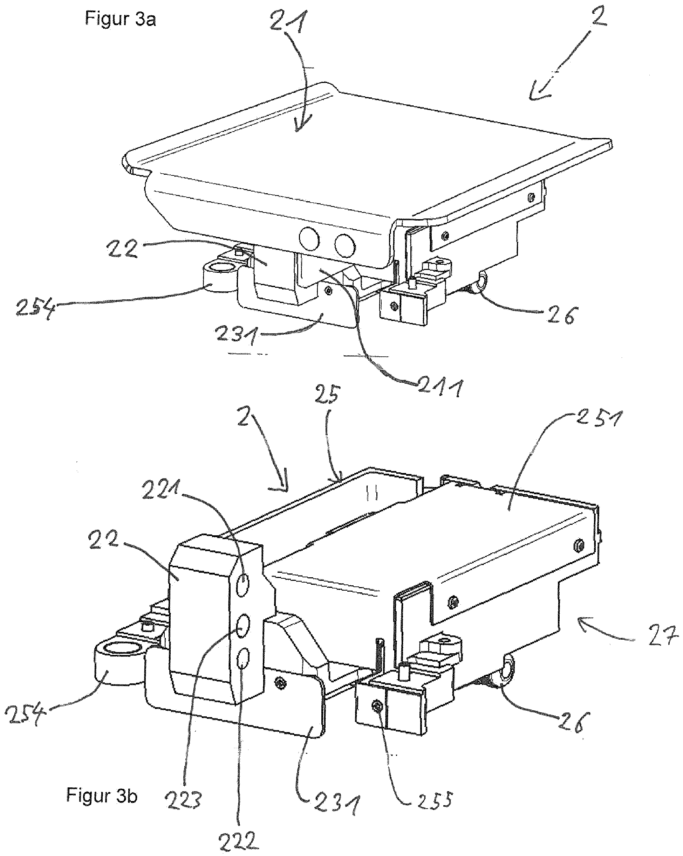

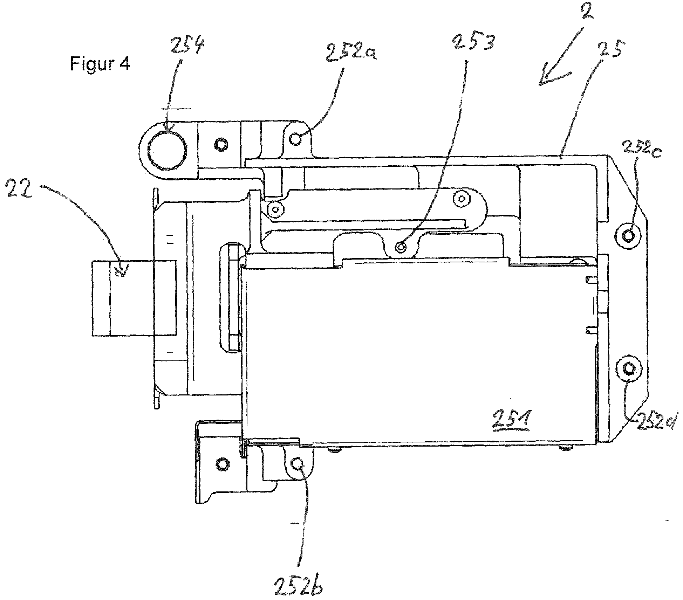

Unterhalb des Ablagebereichs 12 ist innerhalb des Maschinengehäuses 11 eine Wiegevorrichtung 2 aufgenommen. Die Wiegevorrichtung 2 ist in den **Fig. 3a, 3b** **und** **4** näher dargestellt. Die Wiegevorrichtung 2 weist eine Lastplatte 21 auf, deren Auflagefläche horizontal verläuft und sich in dem Ablagebereich 12 parallel zu der Oberfläche des Maschinengehäuses 11 erstreckt. Die Oberfläche des Maschinengehäuses 11 in dem Ablagebereich 12 wird durch eine Basisplatte 121 gebildet. Diese Basisplatte 121 ist einstückig mit dem Maschinengehäuse 11 ausgebildet. Von der Basisplatte 121 ausgehend sind Seitenwände vorgesehen, die sich nach unten erstrecken und so einen Bauraum bilden, in dem die Wägevorrichtung 2 aufgenommen ist. Insoweit bildet das Maschinengehäuse 11 als Bauraum zur Aufnahme der Wägevorrichtung 2 eine U-förmige Wanne aus in der die Wägevorrichtung 2 gehaltert ist.

Die Wägevorrichtung 2 weist einen Lastaufnehmer 27 auf, der einen Wägerahmen 25, einen Biegestab 24 und ein Krafteinleiteelement 23 umfasst. Weiter weist der Lastaufnehmer 27 eine in den Figuren nicht näher dargestellte Auswerteelektronik auf, die ein von dem Biegestab 24 aufgenommenes Sensorsignal aufbereitet und/oder verarbeitet. Über eine Schnittstelle 26 ist diese Auswerteelektronik mit weiteren Komponenten, beispielsweise einem Drucker und/oder einer Bedien- und Anzeigevorrichtung und/oder weiteren Wägevorrichtungen verbindbar. Die Schnittstelle 26 ist dabei als festverdrahtete serielle Schnittstelle ausgebildet und wird über eine PG-Verschraubung abgedichtet. Ein Wägeergebnis wird über die Schnittstelle 26 an eine angeschlossene Bedien- und/oder Anzeigevorrichtung geleitet und dort angezeigt. Über einen angeschlossenen Verkaufsspeicher oder ein Warenwirtschaftssystem kann der Preis der Ware ermittelt werden und dann eine Preisrechnung erfolgen. Auf Wunsch kann der Preis und oder das Gewicht dann über einen an die Schnittstelle 26 angeschlossenen Drucker auf einem Etikett ausgedruckt werde. Die Preisermittlung kann von der Auswerteelektronik vorgenommen werden. Alternativ kann die Preisermittlung auch in einer separaten Steuereinheit erfolgen, beispielsweise in einer CPU-Einheit einer an die Schnittstelle 26 angeschlossenen Ladenwaage.

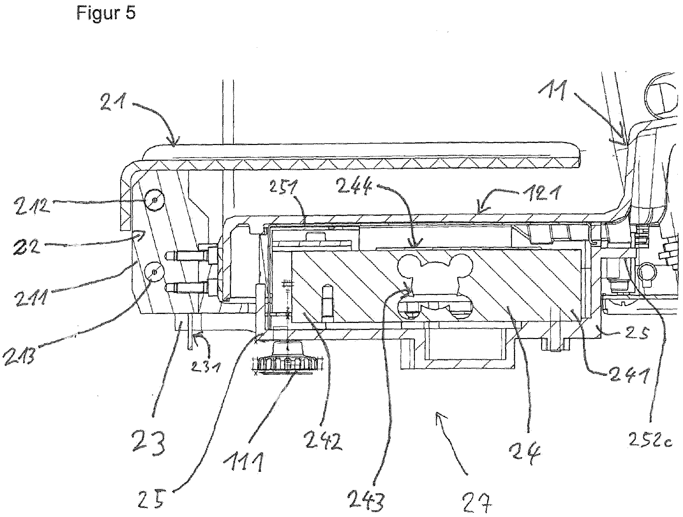

In der Fig. 5 ist der Biegestab 24 näher dargestellt. Der Biegestab 24 ist aus einem Aluminiumkörper ausgebildet und weist ein feststehendes Ende 241 sowie eine bewegliches Ende 242 auf. Das bewegliche Ende 242 ist über ein Krafteinleitungselement 23 mit der Lastplatte 21 verbunden. Das feststehende Ende 241 ist in dem Wägerahmen 25 fest verschraubt. Über eine Schwächungszone 243 ist der feststehende Bereich des Biegestabs 241 mit dem beweglichen Bereich 242 einstückig verbunden. Im Bereich dieser Schwächungszone sind DMS (Dehnungsmessstreifen)-Sensoren angeordnet, die eine Verformung des Biegestabs detektieren. Die Auswerteeinrichtung verarbeitet dieses von den DMS-Sensoren gelieferte Signal bzw. bereitet dieses auf, sodass daraus das Gewichtsignal ermittelt werden kann.

In Fig. 3a ist die Wiegevorrichtung 2 mit aufgesetzter Lastplatte 21 gezeigt. Die Lastplatte weist eine Lastplattenhalterung 211 auf, über die die Lastplatte in einer Kupplungseinrichtung 22 des Lasteinleitungselements 23 gehaltert ist. Die Kupplungseinrichtung 22 ist als werkzeuglos lösbare Kupplungseinrichtung 22 ausgebildet, sodass die Lastplatte 21 durch einfache manuelle Handgriffe von der Schneidemaschine 1 gelöst werden kann, und beispielsweise in einer Spülmaschine gereinigt werden kann.

Die Kupplungseinrichtung 22 weist zwei horizontal verlaufende Ausnehmungen 221 und 222 auf, in die zwei Bolzen der Lastplattenhalterung 211 einsetzbar sind. Zwischen diesen beiden Aufnahmen 221 und 222 ist ein Magnet 223 vorgesehen, der mit der magnetischen Lastplattenhalterung 211 zusammenwirkt und die Lastplatte 21 in der eingekoppelten Stellung sichert. Der Magnet 223 beaufschlagt dazu die Lastplattenhalterung 211 in Richtung der eingesetzten Stellung der Lastplatte 21, sodass diese im Betrieb der Schneidemaschine 1 an der Kupplungseinrichtung 22 gesichert ist und mechanisch fest mit dieser verbunden ist. Die Kupplungseinrichtung 22 ist, wie in Fig. 5 dargestellt, mit dem Lasteinleitungselement 23 verbunden, welches seinerseits wiederum mit dem beweglichen Ende 242 des Biegestabs 24verbunden ist. Wird auf die Lastplatte 21 Wiegegut, bzw. abgetrennte Scheiben des Schneidguts aufgelegt, so wird durch diese kraftschlüssige Verbindung das bewegliche Ende 242 des Biegestabs 24 nach unten bewegt. Dadurch tritt im Bereich der Schwächungszone 243 eine entsprechende Verformung des Biegestabs 24 auf, die proportional zu dem Gewicht der aufgelegten Scheiben ist, und von den Dehnungsmessstreifen detektiert wird.

Das Maschinengehäuse 11 bildet eine nach oben zu dem Ablagebereich 12 hin geschlossene Wanne zur Aufnahme des Biegestabs 24. Das Krafteinleitungselement 23 ist so ausgebildet, dass es um die Wand des Maschinengehäuses 11 herum greift, und unterhalb der Seitenwand des Maschinengehäuses in den Bauraum hineingreift.

Das Krafteinleitungselement 23 weist eine Schmutzblende 231 auf, die mit Abstand und parallel zu der Seitenwand des Maschinengehäuses 11 angeordnet ist. Die Schmutzblende 231 deckt den Eintrittsbereich des Maschinengehäuses 11 ab und verhindert, dass Schmutzpartikel entlang des Krafteinleitungselements 23 bis nach Innen in den Bauraum bzw. bis zum Lastaufnehmer 27 gelangen können.

Die Befestigung der Wiegeeinrichtung 2 bzw. des Lastaufnehmers 27 in dem Maschinengehäuse 11 erfolgt über den Wägerahmen 25. Wie in der Fig. 4 dargestellt ist, weist der Wägerahmen 25 vier Befestigungspunkte 252a, 252b, 252c und 252d auf. Diese Befestigungspunkte wirken mit Aufnahmen zusammen, die an dem Maschinengehäuse angeordnet sind. Auf der Rückseite der Basisplatte 121 sind dazu entsprechende Gewindelöcher ausgebildet, die die Aufnahmen bilden. Der Wägerahmen 25 kann über die Befestigungspunkte 252a, 252b, 252c und 252d in dem Maschinengehäuse lösbar und dennoch mechanisch fest verbunden werden.

Eine Abschirmung 251 ist mit dem Wägerahmen 25 abnehmbar verbunden. Der Wägerahmen weist an seiner Unterseite einen geschlossenen Boden auf. In dem Aufnahmeraum zwischen dem Boden und der Abschirmung 251 ist der Biegestab 24 und eine Auswerteelektronik aufgenommen. Der Wägerahmen 25 bildet zusammen mit der abnehmbaren Abschirmung 251 einen gekapselten Aufnahmeraum für den Biegestab 24 und die Auswerteelektronik, um diese vor elektromagnetischen Störungen und Verschmutzungen, wie z. Bsp. Spritzwasser oder Schmutzpartikel zu schützen.

Die Abschirmung 251 ist über Schraubverbindungen mit dem Wagerahmen 25 verbunden und kapselt den Biegestab 24 und dessen Auswerteelektronik. Eine Plombe 255 versiegelt eine oder mehrere der Schraubverbindungen der Abschirmung 251. Die Plombe 255 ist an der Stirnseite des Wägerahmens 25 so angeordnet, dass sie auch bei eingebauter Wägeeinheit 2 von außerhalb des Maschinengehäuses einsehbar bzw. ablesbar ist. Bei einer Manipulation des Biegestabs 24 muss zwangsläufig die Abschirmung abgenommen, also die Plombe 255 zerstört werden. Eine Manipulation ist dabei gut zu detektieren.

Für ein genaues Wiegeergebnis ist es erforderlich, dass die Wiegeeinrichtung 2 exakt horizontal ausgerichtet ist. Um dieses zu gewährleisten bzw. die horizontale Ausrichtung der Wiegeeinrichtung 2 einstellen zu können, ist vorgesehen, dass das Maschinengehäuse 11 höhenverstellbare Gehäusefüße 111 aufweist. An dem Wägerahmen 25 ist eine optische Libelle 254 angebracht, die, wie in Fig. 1 dargestellt ist, von außerhalb des Maschinengehäuses 11 ablesbar ist. Die Libelle 254 verläuft dazu unterhalb der Seitenwand des Maschinengehäuses 11 hindurch bis nach Außen. So kann die Libelle 254 von Außen einfach abgelesen werden.

Um bei einer hohen Last eine Zerstörung der Wiegeeinrichtung 2 zu verhindern, weist der Wägerahmen 25 eine Überlastsicherung 253 auf. Diese ist als Anschlag für den Biegestab 24 ausgebildet. Wird eine zu hohe Last auf die Lastplatte 21 aufgelegt, so führt dies zu einer entsprechend hohen Verformung bzw. einem hohen Ausschlag des frei beweglichen Endes 242 des Biegestabs 24. Um zu verhindern, dass durch eine zu große Verformung der Biegestab 24 bleibende Schädigungen bekommt, ist ein einstellbarer Anschlag 253 vorgesehen, der diese Bewegung des freien Endes des Biegestabs 24 mechanisch begrenzt.

### Bezugszeichenliste

- 1: Schneidemaschine
- 11: Maschinengehäuse
- 111: Gehäusefüße
- 112: Motorturm
- 12: Ablagebereich
- 121: Basisplatte
- 13: Schneidmesser
- 131: Messerschutzring
- 132: Abstreifer
- 14: Anschlagsplatte
- 141: Schneidspalteinstellung
- 15: Schneidgutschlitten
- 151: Schlittenarm
- 2: Wägevorrichtung
- 21: Lastplatte
- 211: Lastplattenhalterung
- 212: Bolzen
- 213: Bolzen
- 22: Kupplung
- 221: Aufnahmeöffnung
- 222: Aufnahmeöffnung
- 223: Magnet
- 23: Krafteinleitungselement
- 231: Schmutzblende
- 24: Biegestab
- 241: feststehendes Ende
- 242: bewegliches Ende
- 243: Schwächungszone
- 244: DMS
- 25: Wägerahmen
- 251: Abschirmung
- 252a, b, c, d: Befestigungen
- 253: Überlastsicherung
- 254: Libelle
- 255: Plombe
- 26: Schnittstelle
- 27: Lastaufnehmer

## Patentansprüche

1. Schneidemaschine zum Abtrennen von Scheiben von strangförmigen Lebensmitteln, mit einem Maschinengehäuse (11), dass einen Antriebsmotor und ein von dem Antriebsmotor angetriebenes rotierendes Schneidmesser (13) haltert, mit einem im Bereich des Schneidmessers angeordneten Ablagebereich (12) zum Ablegen der abgetrennten Scheiben und mit einer Wägevorrichtung (2), die einen in einem unterhalb des Ablagebereichs angeordneten Bauraum des Maschinengehäuses angeordneten Lastaufnehmer (27) und eine in dem Ablagebereich angeordnete Lastplatte (21) zur Aufnahme der abgetrennten Scheiben aufweist,
**dadurch gekennzeichnet,**
**dass** die Wägevorrichtung (2) als separate Baueinheit ausgebildet ist, die mit dem Maschinengehäuse (11) mechanisch fest derart verbindbar ist, dass sie an Befestigungen innerhalb des Maschinengehäuses (11) aufgehängt ist, indem der Lastaufnehmer (27) einen Biegestab (24) mit einem feststehenden Ende (241) und einem beweglichen Ende (242) umfasst, und das bewegliche Ende (242) mit der Lastplatte (21) und das feststehende Ende (241) mittelbar oder unmittelbar mit dem Maschinengehäuse (11) lösbar und mechanisch fest verbindbar ist.

2. Schneidemaschine nach Anspruch 1,
**dadurch gekennzeichnet,**
**dass** das Maschinengehäuse (11) in dem Bauraum mindestens zwei Aufnahmen zur lösbaren Befestigung der Wägevorrichtung (2) aufweist, und die Aufnahmen als Schraubaufnahmen und/oder Rastaufnahmen und/oder Bajonettaufnahmen ausgebildet sind.

3. Schneidemaschine nach Anspruch 2,
**dadurch gekennzeichnet,**
**dass** die mindestens zwei Aufnahmen an der Unterseite einer Basisplatte (121) des Maschinengehäuses (11) angeordnet sind, wobei die Oberseite der Basisplatte (121) zu dem Ablagebereich (12) hin gerichtet ist und die Unterseite der Basisplatte (121) den Bauraum nach oben hin abschließt.

4. Schneidemaschine nach Anspruch 2 oder 3,
**dadurch gekennzeichnet,**
**dass** der Biegestab (24) mit seinem feststehenden Ende (241) in einem Wägerahmen (25) der Wägevorrichtung (2) befestigt ist, und der Wägerahmen (25) mindestens zwei mit den Aufnahmen des Bauraums korrespondierende Befestigungen (252) aufweist, wobei vorzugsweise vorgesehen ist, dass der Wägerahmen (25) an den Aufnahmen hängend befestigt ist.

5. Schneidemaschine nach einem der vorhergehenden Ansprüche,
**dadurch gekennzeichnet,**
**dass** das Maschinengehäuse (11) höhenverstellbare Standfüße (111) aufweist und die horizontale Ausrichtung der Wägevorrichtung (2) und/oder des Lastaufnehmers (27) durch Einstellung dieser Standfüße (111) justierbar ist.

6. Schneidemaschine nach einem der vorhergehenden Ansprüche,
**dadurch gekennzeichnet,**
**dass** der Lastaufnehmer und/oder der Wägerahmen (25) eine optische Libelle (254) aufweist, die von außerhalb des Maschinengehäuses (11) einsehbar ist, und/oder dass der Wägerahmen (25) einen als Überlastsicherung dienenden, insbesondere einstellbaren Anschlag (253) aufweist.

7. Schneidemaschine nach einem der vorhergehenden Ansprüche,
**dadurch gekennzeichnet,**
**dass** der in dem Maschinengehäuse (11) angeordnete Bauraum nach oben hin zu dem Ablagebereich (12) geschlossen ausgebildet und von zumindest zwei von dem Ablagebereich ausgehenden Wänden des Maschinengehäuses (11) umfasst ist, so dass der Bauraum und/oder der Lastaufnehmer (27) gegen das Eindringen von Flüssigkeiten aus dem Ablagebereich geschützt ist.

8. Schneidemaschine nach einem der vorhergehenden Ansprüche,
**dadurch gekennzeichnet,**
**dass** das bewegliche Ende des Biegestabs (24) über ein Krafteinleitungselement (23) mit der Lastplatte (21) verbunden ist und das Krafteinleitungselement (23) eine werkzeuglos lösbare Kupplungseinrichtung (22) zur Aufnahme der Lastplatte (21) aufweist, wobei vorzugsweise vorgesehen ist, dass die Kupplungseinrichtung (22) einen Magnet (223) zum Haltern der Lastplatte (21) aufweist.

9. Schneidemaschine nach Anspruch 8,
**dadurch gekennzeichnet,**
**dass** die Kupplungseinrichtung (22) einen Sensor, vorzugsweise einen Reedkontakt oder einen Mikroschalter oder einen optischen Schalter zur Detektion der korrekten Aufnahme der Lastplatte aufweist.

10. Schneidemaschine nach einem der Ansprüche 8 oder 9,
**dadurch gekennzeichnet,**
**dass** die Kupplungseinrichtung (22) eine Aufnahmeöffnung oder mehrere Aufnahmeöffnungen (221, 222) für Lagerelemente der Lastplatte (21) aufweist.

11. Schneidemaschine nach einem der vorhergehenden Ansprüche,
**dadurch gekennzeichnet,**
**dass** der Lastaufnehmer (27) eine Schnittstelle (26) zum Anschluß eines Druckers und/oder einer Anzeigeeinrichtung und/oder einer Eingabeeinrichtung und/oder einer weiteren Wägeeinrichtung aufweist, wobei vorzugsweise vorgesehen ist, dass die Schnittstelle (26) als digitale Schnittstelle, insbesondere als drahtgebundene serielle Schnittstelle oder drahtlose Schnittstelle ausgebildet ist.

12. Verkaufseinheit bestehend aus einer Schneidemaschine nach einem der vorhergehenden Ansprüche,
**dadurch gekennzeichnet,**
**dass** die Verkaufseinheit zwei Pakete umfasst, wobei die als separate Baueinheit ausgebildete Wägevorrichtung als ein Paket und die Schneidemaschine ohne die Wägevorrichtung als zweites Paket verpackt sind.

13. Verfahren zur Herstellung einer Schneidemaschine nach Anspruch 1, wobei die Wägevorrichtung als eine eichfähige Wägevorrichtung ausgebildet ist,
**dadurch gekennzeichnet,**
**dass** die Wägevorrichtung (2) als separate Baueinheit ausgebildet ist, die außerhalb der Schneidemaschine (1) geeicht wird und nach dem Eichvorgang in die Schneidemaschine eingesetzt und mit dieser mechanisch fest verbunden wird.

14. Verfahren nach Anspruch 13,
**dadurch gekennzeichnet,**
**dass** die Wägevorrichtung (2) zum Eichen in eine Aufnahmevorrichtung eingesetzt und in der Aufnahmevorrichtung über an dem Wägerahmen (25) angeordneten Befestigungspunkten (252a, b, c, d) mit der Aufnahmevorrichtung mechanisch fest und lösbar verbunden wird, wobei die Wägevorrichtung nachher in der Schneidemaschine über dieselben Befestigungspunkte (252a, b, c, d) befestigt wird.

15. Verfahren nach Anspruch 13 oder 14,
**dadurch gekennzeichnet,**
**dass** die Wägevorrichtung (2) nach abgeschlossenem Eichvorgang außerhalb der Schneidemaschine (1) mit einer Plombe versehen wird und/oder dass die Wägevorrichtung (2) nach dem Einbau in die Schneidemaschine (1) über eine Schnittstelle (26) mit einer Anzeigeeinheit und einem Drucker und/oder einer CPU-Einheit verbunden wird.

## Claims

1. Cutting machine for separating slices of stripshaped foods, having a machine housing (11) which holds a drive motor and a rotating cutting knife (13) driven by the drive motor, having a delivery area (12) arranged in the area of the cutting knife for depositing the separated slices, and having a weighing device (2), which has a load carrier (27) arranged in an installation space of the machine house arranged underneath the delivery area and a load plate (21) arranged in the delivery area to receive the separated slices,
**characterized in that**
the weighing device (2) is formed as a separate modular unit, which can be connected mechanically rigidly to the machine housing (11) in such a way that it is suspended on fixings within the machine housing (11), **in that** the load carrier (27) comprises a bending beam (24) with a stationary end (241) and a movable end (242), and the movable end (242) can be detachably and mechanically rigidly connected to the load plate (21), and the stationary end (241) can be detachably and mechanically rigidly directly or indirectly connected to the machine housing (11).

2. Cutting machine according to Claim 1,
**characterized in that**
in the installation space, the machine housing (11) has at least two mountings for the detachable fixing of the weighing device (2), and the mountings are formed as screw mountings and/or latching mountings and/or bayonet mountings.

3. Cutting machine according to Claim 2,
**characterized in that**
the at least two mountings are arranged on the underside of a baseplate (121) of the machine housing (11), wherein the upper side of the baseplate (121) is directed towards the delivery area (12) and the underside of the baseplate (121) closes off the installation space at the top.

4. Cutting machine according to Claim 2 or 3,
**characterized in that**
the bending beam (24) is fixed by its stationary end (241) in a weighing frame (25) of the weighing device (2), and the weighing frame (25) has at least two fixings (252) corresponding to the mountings of the installation space, wherein provision is preferably made for the weighing frame (25) to the fixed to the mountings in a suspended manner.

5. Cutting machine according to one of the preceding claims,
**characterized in that**
the machine housing (11) has adjustable-height supporting feet (111), and the horizontal alignment of the weighing device (2) and/or of the load carrier (27) can be adjusted by adjusting these supporting feet (111).

6. Cutting machine according to one of the preceding claims,
**characterized in that**
the load carrier and/or the weighing frame (25) has an optical spirit level (254), which can be viewed from outside the machine housing (11), and/or **in that** the weighing frame (25) has a stop (253), in particular an adjustable stop, serving as an overload safeguard.

7. Cutting machine according to one of the preceding claims,
**characterized in that**
the installation space arranged in the machine housing (11) is formed so as to be closed at the top relative to the delivery area (12) and surrounded by at least two walls of the machine housing (11) originating from the delivery area, so that the installation space and/or the load carrier (27) is protected against the penetration of liquids from the delivery area.

8. Cutting machine according to one of the preceding claims,
**characterized in that**
the movable end of the bending beam (24) is connected to the load plate (21) via a force introduction element (23), and the force introduction element (23) has a coupling apparatus (22), which can be detached without tools, for mounting the load plate (21), wherein provision is preferably made for the coupling apparatus (22) to have a magnet (223) for holding the load plate (21) .

9. Cutting machine according to Claim 8,
**characterized in that**
the coupling apparatus (22) has a sensor, preferably a reed contact or a microswitch or an optical switch, for the detection of the correct mounting of the load plate.

10. Cutting machine according to either of Claims 8 and 9,
**characterized in that**
the coupling apparatus (22) has a mounting opening or multiple mounting openings (221, 222) for bearing elements of the load plate (21).

11. Cutting machine according to one of the preceding claims,
**characterized in that**
the load carrier (27) has an interface (26) for the connection of a printer and/or a display apparatus and/or an input apparatus and/or a further weighing apparatus, wherein provision is preferably made for the interface (26) to be formed as a digital interface, in particular as a wire-bound serial interface or wire-free interface.

12. Retail unit comprising a cutting machine according to one of the preceding claims,
**characterized in that**
the retail unit comprises two packages, wherein the weighing device formed as a separate modular unit is packed as one package, and the cutting machine without the weighing device is packed as a second package.

13. Method for producing a cutting machine according to Claim 1, wherein the weighing device is formed as a weighing device that can be calibrated,
**characterized in that**
the weighing device (2) is formed as a separate modular unit which is calibrated outside the cutting machine (1) and, following the calibration procedure, is inserted into the cutting machine and connected mechanically rigidly to the latter.

14. Method according to Claim 13,
**characterized in that**
the weighing device (2) is inserted into a mounting device for calibration and, in the mounting device, is mechanically rigidly and detachably connected to the mounting device via fixing points (252a, b, c, d) arranged on the weighing frame (25), wherein the weighing device is subsequently fixed in the cutting machine via the same fixing points (252a, b, c, d).

15. Method according to Claim 13 or 14,
**characterized in that**
after the calibration procedure outside the cutting machine (1) has concluded, the weighing device (2) is provided with a seal, and/or **in that** following the installation in the cutting machine (1), the weighing device (2) is connected via an interface (26) to a display unit and a printer and/or a CPU unit.

## Revendications

1. Trancheuse servant à séparer des tranches de produits alimentaires en forme de boudin, comprenant un boîtier de machine (11) qui supporte un moteur d'entraînement et une lame de coupe (13) rotative entraînée par le moteur d'entraînement, une zone de dépose (12) disposée dans la région de la lame de coupe et servant à la dépose des tranches séparées, et un dispositif de pesée (2) qui comprend un capteur de charge (27) disposé dans un espace d'installation, disposé en dessous de la zone de dépose, du boîtier de machine et une plaque de charge (21) disposée dans la zone de dépose et servant à recevoir les tranches séparées,
**caractérisée en ce que**
le dispositif de pesée (2) est réalisé sous la forme d'une unité modulaire séparée qui peut être reliée solidement mécaniquement au boîtier de machine (11) de telle sorte qu'elle soit suspendue à l'intérieur du boîtier de machine (11) au niveau de fixations, du fait que le capteur de charge (27) comporte une barre de flexion (24) dotée d'une extrémité fixe (241) et d'une extrémité mobile (242), et que l'extrémité mobile (242) peut être reliée solidement mécaniquement et de manière amovible à la plaque de charge (21) et l'extrémité fixe (241) peut être reliée solidement mécaniquement et de manière amovible directement ou indirectement au boîtier de machine (11).

2. Trancheuse selon la revendication 1,
**caractérisée en ce que**
le boîtier de machine (11) comprend, dans l'espace d'installation, au moins deux logements servant à fixer de manière amovible le dispositif de pesée (2), et les logements sont réalisés sous forme de logements de vis et/ou de logements d'encliquetage et/ou de logements à baïonnette.

3. Trancheuse selon la revendication 2,
**caractérisée en ce que**
lesdits au moins deux logements sont disposés sur le côté inférieur d'une plaque de base (121) du boîtier de machine (11), le côté supérieur, de la plaque de base (121) étant orienté en direction de la zone de dépose (12) et le côté inférieur de la plaque de base (121) fermant l'espace d'installation vers le haut.

4. Trancheuse selon la revendication 2 ou 3,
**caractérisée en ce que**
la barre de flexion (24) est fixée par son extrémité fixe (241) dans un cadre de pesée (25) du dispositif de pesée (2), et le cadre de pesée (25) comprend au moins deux fixations (252) correspondant aux logements de l'espace d'installation, le cadre de pesée (25) étant de préférence fixé de manière suspendue aux logements.

5. Trancheuse selon l'une quelconque des revendications précédentes,
**caractérisée en ce que**
le boîtier de machine (11) comprend des pieds de support (111) réglables en hauteur et l'orientation horizontale du dispositif de pesée (2) et/ou du capteur de charge (27) peut être ajustée par réglage de ces pieds de support (111).

6. Trancheuse selon l'une quelconque des revendications précédentes,
**caractérisée en ce que**
le capteur de charge et/ou le cadre de pesée (25) comprennent un niveau optique (254) qui est visible depuis l'extérieur du boîtier de machine (11), et/ou **en ce que** le cadre de pesée (25) comprend une butée (253) en particulier réglable servant de protection contre les surcharges.

7. Trancheuse selon l'une quelconque des revendications précédentes,
**caractérisée en ce que**
l'espace d'installation disposé dans le boîtier de machine (11) est réalisé de manière fermée vers le haut en direction de la zone de dépose (12) et est entouré par au moins deux parois, partant de la zone de dépose, du boîtier de machine (11), de telle sorte que l'espace d'installation et/ou le capteur de charge (27) soient protégés contre l'infiltration de liquides provenant de la zone de dépose.

8. Trancheuse selon l'une quelconque des revendications précédentes,
**caractérisée en ce que**
l'extrémité mobile de la barre de flexion (24) est reliée à la plaque de charge (21) par le biais d'un élément d'application de force (23) et l'élément d'application de force (23) comprend un moyen d'accouplement (22), pouvant être détaché sans outil, servant à loger la plaque de charge (21), le moyen d'accouplement (22) comprenant de préférence un aimant (223) servant à retenir la plaque de charge (21).

9. Trancheuse selon la revendication 8,
**caractérisée en ce que**
le moyen d'accouplement (22) comprend un capteur, de préférence un contact à lames souples ou un commutateur miniature ou un commutateur optique servant à détecter le logement correct de la plaque de charge.

10. Trancheuse selon la revendication 8 ou 9,
**caractérisée en ce que**
le moyen d'accouplement (22) comprend une ouverture de logement ou plusieurs ouvertures de logement (221, 222) pour des éléments paliers de la plaque de charge (21).

11. Trancheuse selon l'une quelconque des revendications précédentes,
**caractérisée en ce que**
le capteur de charge (27) comprend une interface (26) servant à la connexion d'une imprimante et/ou d'un moyen d'affichage et/ou d'un moyen d'entrée et/ou d'un autre dispositif de pesée, l'interface (26) étant réalisée de préférence sous forme d'interface numérique, en particulier sous forme d'interface série câblée ou d'interface sans fil.

12. Unité de vente constituée d'une trancheuse selon l'une quelconque des revendications précédentes,
**caractérisée en ce que**
l'unité de vente comporte deux paquets, le dispositif de pesée réalisé sous forme d'unité modulaire séparée étant emballé en tant que paquet et la trancheuse sans le dispositif de pesée étant emballée en tant que deuxième paquet.

13. Procédé de fabrication d'une trancheuse selon la revendication 1, le dispositif de pesée étant réalisé sous forme de dispositif de pesée pouvant être étalonné,
**caractérisé en ce que**
le dispositif de pesée (2) est réalisé sous forme d'unité modulaire séparée qui est étalonnée à l'extérieur de la trancheuse (1) et introduite dans la trancheuse et reliée solidement mécaniquement à celle-ci après l'opération d'étalonnage.

14. Procédé selon la revendication 13,
**caractérisé en ce que**
le dispositif de pesée (2) est introduit dans un dispositif de logement pour l'étalonnage et, dans le dispositif de logement, est relié de manière amovible et solidement mécaniquement au dispositif de logement par le biais de points de fixation (252a, b, c, d) disposés sur le cadre de pesée (25), le dispositif de pesée étant ensuite fixé dans la trancheuse par le biais de ces mêmes points de fixation (252a, b, c, d).

15. Procédé selon la revendication 13 ou 14,
**caractérisé en ce**
**qu'**une fois l'opération d'étalonnage terminée, le dispositif de pesée (2) est doté d'un scellé à l'extérieur de la trancheuse (1) et/ou **en ce que** le dispositif de pesée (2) est, après l'installation dans la trancheuse (1), relié à une unité d'affichage et à une imprimante et/ou à une unité centrale de traitement par le biais d'une interface (26).
